Europäisches Patentamt

(19) European Patent Office

Office européen des brevets

(11) Publication number: **0 152 213**

**A2**

(12) **EUROPEAN PATENT APPLICATION**

(21) Application number: **85300527.0**

(22) Date of filing: **25.01.85**

(51) Int. Cl.⁴: **B 29 C 61/06**
**H 02 G 15/18**

(30) Priority: **26.01.84 GB 8402070**
**26.01.84 US 574751**
**06.02.84 GB 8403053**

(43) Date of publication of application:
**21.08.85 Bulletin 85/34**

(84) Designated Contracting States:
**AT BE CH DE FR GB IT LI NL SE**

(71) Applicant: **RAYCHEM LIMITED**
**Rolls House 7, Rolls Buildings Fetter Lane**
**London, EC4 1NL(GB)**

(72) Inventor: **Gansbuehlar, George Michael John**
**1 Austen Crescent**
**Liden Swindon Wiltshire(GB)**

(72) Inventor: **Heidenhain, Frank**
**Waldpruderingerstrasse 29**
**Munich 82(DE)**

(72) Inventor: **Schwartz, Lawrence David**
**Old Thatch Manor Lane**
**Shrivenham Wiltshire(GB)**

(72) Inventor: **Cordia, Hans Maria**
**Kerweg 26**
**B-3041 Pennenberg(BE)**

(72) Inventor: **Barker, David John**
**52 Town End Road**
**Faringdon Oxfordshire(GB)**

(72) Inventor: **Hutt, Noman**
**2 Elmore Eldene**
**Swindon Wiltshire(GB)**

(72) Inventor: **Welsh, Laurence Myers**
**623 Keats Court**
**Palo Alto California 94086(US)**

(72) Inventor: **Lopez, Eugene F.**
**893 Russell Drive**
**Sunnyvale California 94086(US)**

(72) Inventor: **Lo, Jhy-Dou R.**
**10390 Henry Dreek Place**
**Cupertino Caifornia 95014(US)**

(72) Inventor: **Taft, David T.**
**45 Melanie Lane**
**Atherton California 94025(US)**

(74) Representative: **Jay, Anthony William et al,**
**Raychem Limited Intellectual Property Law Department**
**Faraday Road**
**Dorcan Swindon Wiltshire(GB)**

(54) Enclosing articles.

㊼ Enclosures for articles such as electrical cable splices or pipelines have curable filling of sufficient thickness and/or layers of different materials to provide a layered cured structure. A relatively flexible intermediate layer in a cured cable splice enclosure provides advantages in installation and service, while a heat-flowable intermediate layer improves performance in pipe protection applications.

*Fig. 3.*

Croydon Printing Company Ltd

DRAWINGS
6 SHEETS

## ENCLOSING ARTICLES

This invention relates to a method of enclosing an object or article. enclosures formed by the method. and kits and articles for use in such a method.

Although the invention is not necessarily restricted to enclosing any particular form of article, it may be especially useful for enclosing elongate articles such as joints in electrical or telecommunication cables, or service lines such as oil pipes and district heating pipes which may require corrosion protection. Such articles have hitherto been enclosed and protected, for example, by filling a surrounding enclosure box with mastic or curable resin (for cable joints), or by shrinking a heat-shrinkable enclosure around the article, usually with a heat-activated adhesive to ensure a good seal between the enclosure and the enclosed article. The heat-activated adhesive may be a hot melt adhesive or a curable adhesive, for example of the advantageous kind described and claimed in British Patent Specification No. 2104800, comprising two or more reactive components in the form of intermixed separate powders, giving a good combination of long storage life and fast cure.

Known enclosures using curable adhesives are liable to suffer from difficulties in application and use on the article owing to conflicts between adhesive requirements such as high rate and degree of cure, surface wetting, void filling, flexibility, strength, and bonding between dissimilar materials such as plastics and metal. Preferably enough heat is applied to cause the adhesive to melt sufficiently to wet the article enclosed, and it is precisely at that stage that the heat-sink effect of the articles, especially of a metal substrate such as a pipeline, becomes greatest, thus inhibiting the curing of systems which require elevated curing temperatures. The present invention relates to enclosures in which the adhesive is structured to alleviate at least some of those difficulties.

The invention provides an enclosure comprising substantially solid heat-flowable polymeric material at least partly enclosing at least part of an article which polymeric material comprises curable material and has sufficient thickness and/or layers of different materials to provide, at least temporarily after curing of the curable material, a layered cured structure, provided that, when the heat-flowable polymeric material comprises a layer of thermoplastic polymeric material overlying a substantially solid layer of the curable material enclosing the article, the curable material comprises (a) an epoxy compound or (b) a mixture of a free-radical-curable material, a polymer and a free-radical generator or an activator catalyst for such a generator. The invention also provides a method of enclosing an article comprising (1) making an enclosure as above by placing the heat-flowable polymeric material so as at least partly to enclose at least part of the article, and (2) curing the curable material to produce the layered cured structure.

It is to be understood that references to layered structures herein are not necessarily limited to layers having distinct interfaces, more or less smoothly graduated transition between layers being quite acceptable for many purposes.

The layered cured structure of the said polymer composition (hereinafter called an adhesive for convenience, without limitation to materials traditionally regarded as adhesives or to materials which actually adhere to the enclosed article, although such adhesion may be preferred) has the advantage that a relatively softer and/or more flexible layer can be formed to provide flexibility while harder layers can be formed to provide strength inside and/or outside the flexible layer. Such a layer can, for example. allow greater flexibility during installation on a cable splice, where more brittle structures could be fractured or otherwise disrupted during positioning of the spliced cable e.g. in a conduit or manhole.

In one convenient form of the invention, the adhesive may be a single material which is curable throughout, having sufficient thickness to produce the layered cured structure by progressive attenuation of the degree of cure. Such attenuation could be achieved, for example, by a suitable curing temperature gradient during a relatively short heat-curing cycle;

and/or by initiation of free-radical curing at a surface of the composition, e.g. by contacting an adhesive containing a free-radical generator with an activator catalyst for such a generator, or (less desirably) by contacting an adhesive containing the catalyst with a layer containing the generator. It does not matter if curing eventually proceeds to completion, provided that the layered structure persists long enough for the purpose in question, for example to facilitate final positioning of a spliced power cable in a conduit or manhole.

The cure can be initiated from the outside, e.g. by application of heat or from the inside, e.g. by heating the enclosed article and/or by applying to the article the aforementioned catalyst before application of the curable adhesive thereto. Initiation from both inside and outside can be used to achieve an intermediate less cured layer in suitably thick bodies of the adhesive. Alternatively, or in addition, layering may be achieved by applying layers of different curable materials, or layers of the same curable material containing different curing agents or different levels of curing agent or cure inhibitors. References to different curable materials may include different molecular weights of a given kind of polymer.

The adhesive composition may be applied in any convenient way, for example by winding of a self-supporting tape or sheet made of the necessary materials either to form a single curable layer, or a number of different curable layers, or a mixture of curable and non-curable layers. For end uses requiring an adhesive body of irregular thickness. for example enclosures of power cable splices having mechanical connectors of much larger diameter than the cables, it may be more convenient to provide suitably-shaped relatively rigid bodies (hereinafter referred to as "chunks" without implying any particular dimensions or shape) of the adhesive composition which can be positioned to fill the space around the article to be enclosed more efficiently than wrappable tapes.

This aspect of the invention accordingly provides a kit of parts for use in forming an enclosure or practising a method as aforesaid comprising at least one such chunk and/or a wrappable tape or sheet as aforesaid and a cover capable ion use of constraining the heat-flowable material to remain around the enclosed article when heated to a flowable state; and an article for use in an enclosure or method as aforesaid comprising a self-supporting body of the heat-flowable polymeric composition shaped to be positioned without significant bending next to the relevant part of an article to be enclosed.

The adhesive composition may also be provided, in addition to or instead of the above, as a coating on a cover which in use will enclose the adhesive and at least the relevant part of the article. The cover may be dimensionally heat-recoverable, in which case the adhesive (on the cover and/or elsewhere) will preferably be heat-flowable at tempertures which it will encounter during heat-recovery of the cover about the article, and this is also preferable when a non-adhesive coated heat-recoverable cover is used with the separate adhesive (e.g. wrapped tape or chunks) hereinbefore described. Sufficient cure may be imparted to the adhesive during the heat recovery, or additional curing may be effected by further heating after the recovery. Naturally, the adhesive will be suitably physically constrained in its fluid state by other means if the cover is not used, and such means, or the cover, may be removed after curing and/or cooling to a solid state.

Thus, the invention includes an enclosure having a cover which encloses at least part of the heat-flowable polymeric material; and includes such an enclosure wherein the cover comprises dimensionally heat-recoverable polymeric material and the heat-flowable polymeric material is heat-flowable at temperatures which it will encounter during heat-recovery of the cover about the article to be enclosed.

Dimensionally recoverable articles are articles the dimensional configuration of which may be made substantially to change when subjected to suitable treatment, preferably heat treatment.

Usually these articles recover, on heating, towards an original shape from which they have previously been deformed but the term "heat-recoverable", as used herein, also includes an article which on heating, adopts a new configeration, even if it has not been previously deformed.

In their most common forms, such articles comprise a heat-shrinkable sleeve made from a polymeric material exhibiting the property of elastic or plastic memory as described, for example. in U.S. Patents 2,027,962: 3,086,242 and 3.597,372. As is made clear in, for example, U.S. Patent 2,027,962, the original dimensionally heat-stable form may be a transient form in a continuous process in which, for example. an extruded tube is expanded, whilst hot, to a dimensionally heat-unstable form but, in other applications, a preformed dimensionally heat-stable article is deformed to a dimensionally heat-unstable form in a separate stage.

In the production of heat-recoverable articles, the polymeric material may be cross-linked at any stage in the production of the article that will enhance the desired dimensional recoverability.  One manner of producing a heat-recoverable article comprises shaping the polymeric material into the desired heat-stable form, subsequently cross-linking the polymeric material, heating the article to a temperature above the crystalline melting point or, for amorphous materials the softening point, as the case may be, of the polymer, deforming the article and cooling the article whilst in the deformed state so that the deformed state of the article is retained.  In use, since the deformed state of the article is heat-unstable, application of heat will cause the article to assume its orginal heat-stable shape.

In other articles, as described, for example, in British Patent 1,440,524, an elastomeric member such as an outer tubular member is held in a stretched state by a second member, such as an inner tubular member, which, upon heating or other treatment (e.g. with solvent) weakens and thus allows the elastomeric member to recover.

In recent years, heat-recoverable articles have gained widespread use for enclosing elongate objects and protecting them from the environment. For example, heat-recoverable articles are often used for enclosing joints in electrical and telecommunication cables or other equipment and for corrosion protection of service lines such as oil pipes and district heating pipes. The articles may be in the form of hollow sleeves that contract radially on heating or they may be in sheet or tape form so that they can be wrapped around the object if the ends of the object are not readily accessible. One form of device that is especially suitable for enclosing such objects is a so-called "wraparound" device that typically comprises a heat-shrinkable polymeric sheet that can be wrapped around the object to be enclosed and then closed by securing together longitudinally extending opposed edge portions of the wrapped sheet. The sheet is then caused to recover tightly about the object to form an environmental seal. Such a device is described in U.K. Patent No. 1,155,470 the disclosure of which is incorporated herein by reference.

Heat-recoverable articles that are used to protect objects from the environment are usually provided in the direction of recovery with a layer of sealant, e.g. a hot-melt adhesive or a mastic, to form a seal between the object and the heat-recoverable article. With some forms of article, for example splice cases for tele-

0152213

communication cables, the use of hot-melt adhesives are preferred because they have high cohesive and adhesive strength and because, depending on the composition of the adhesives, they can usually retain their strength at elevated temperatures. If it is desired to increase the maximum working temperature of the article, an appropriate adhesive having a higher melting point is chosen. However in certain circumstances, increasing the melting point of the hot-melt adhesive can cause installation problems. For example, if the article is intended to be installed at low ambient temperatures it may not be possible to supply sufficient heat to the adhesive to melt it without damage to the external surface of the article, especially in view of the fact that the materials from which heat-recoverable articles are formed generally have low thermal conductivities. Another problem that may be encountered is that if the object to be enclosed is itself susceptible to damage by heat and mechanical forces, for example if it includes a cable jacket such as one formed from polyvinyl chloride, low density polyethylene or an ethylene copolymer that is not suitable for use at high temperatures, the object to be enclosed may be damaged at the temperature required to melt the hot-melt adhesive.

An aspect of the present invention using thermoplastic or elastomer layers which is especially suited to pipe protection provides an article for enclosing at least part of an object which comprises a dimensionally recoverable (preferably heat-recoverable) cover that is adapted to be recovered about the object and has, extending over at least part of a surface of the cover which will face the object in use, a substantially solid layer of curable adhesive comprising (a) an epoxy compound, or preferably (b) a mixture of a free-radical-curable material (preferably a monomer but possibly a dimer or oligomer), a polymer and a free-radical generator, the article being provided with an intermediate layer comprising heat-softenable polymeric material located between the cover and the adhesive. Preferably the polymeric material in the intermediate layer is a thermoplastic or elastomer having a melting or softening point that is higher than that of the curable adhesive and has a thickness that is greater than that of the curable adhesive.

This aspect of the present invention also provides a method of enclosing at least part of an object which comprises:

(a) installing around the object a substantially solid layer of a curable adhesive comprising (a) an epoxy compound or preferably (b) a mixture of a free-radical-curable monomer, a polymer and a free-radical generator;

(b) installing over the curable adhesive an intermediate layer comprising heat-softenable polymeric material;

(c) installing over the intermediate layer a dimensionally recoverable (preferably heat-recoverable) cover; and

(d) causing recovery of the cover and, curing of the curable adhesive.

The details of construction, materials and formulations, combinations thereof, and other features in
the following discussion of this aspect of the invention may be applied as appropriate to all the other
aspects of the invention.

In all cases it may be preferable to include the
preliminary step of installing on the object an activator layer comprising an activator catalyst which
will activate the free-radical generator of the said
mixture when contacted with the curable adhesive.
However, suitable activators such as salts of transition metals, preferably cobalt or vanadium, may be
included in a recoverable article according to this
invention, preferably incorporated in an intermediate
layer as described above so as to minimise activation
of the generator until the intermediate layer is
softened by heating during installation of the article
on the object. In this way, it is possible that the
priming of the object with the activator catalyst can
be rendered unnecessary and/or curing of the curable
adhesive can be enhanced. The intermediate layer may
itself be curable in other embodiments of this invention.

It will be understood that "substantially solid"
as used herein means that the material so described
has sufficiently high viscosity to remain where placed
or to be carried on a recoverable article as aforesaid
without running off to any significant extent in
contrast to the behaviour of a liquid (at ambient
temperatures) material. When a recoverable article is
used, pre-coating on the article may be preferred.

The curable material whether pre-coated or not, will preferably be "storage stable" in the sense that it does not undergo any unacceptable degree of curing at ambient or normal storage temperatures in the absence of contact with the activator catalyst, thus enabling a product to be provided for convenient use in remote locations such as construction sites.

The term "curable" is understood to have its usual significance in that a "curable" mixture is capable of undergoing a chemical transformation (such as cross-linking or polymerising) resulting in a product which no longer flows appreciably under the combined effects of pressure and temperature greater than ambient.

The enclosures and articles according to this invention can be used for protecting any object, notably elongate articles, for example splices in power or telecommunication cables, and the preferred curable mixture is advantageously used on objects which are substantial heat sinks, e.g. power cables and pipelines. The recoverable article with the curable mixture is especially useful on metal pipelines, e.g. oil pipelines, since a cured adhesive bond can be achieved without on-site mixing of the curing components between the substrate and the polymer cover while adequate storage life of the article is also achievable. Such a bond tends to have superior resistance to soil stress on burying the enclosed pipeline in the ground, and to other environmental effects and can be achieved with suitable curable materials despite the considerable heat sink effect of the pipeline, which inhibits curing of many curable adhesive formu-

0152213

lations, especially when the pipeline is in operation conveying fluids, often at temperatures of not more than 80°C, for example 40 - 80°C. It has surprisingly been found that acceptable bonding can be achieved by suitable embodiments of the present invention between covers based on polyolefins and metal substrates such as pipelines, despite the great dissimilarity of their respective surface properties and the known difficulty of achieving good adhesion to polyolefins.

When an adhesive coated cover is to be used, the curable or thermoplastic polymer material of the intermediate layer (if present) and the curable adhesive may be pre-coated on the recoverable cover, so that steps (a), (b) and (c) of the method according to this invention are carried out simultaneously. Alternatively, each of the three components may be applied separately and sequentially or a single component combining the curable adhesive and the intermediate layer may be used with a separate cover. A further possibility is that the recoverable cover is pre-coated only with the intermediate polymeric material, and the curable adhesive is supplied separately for example as an adhesive wrap of one or more layers or a printed-on formulation, e.g. a two-part epoxy mixed at time of installation. The layer or layers supplied on the cover may be coated on the cover, or the composite may be integrally formed.

The intermediate polymeric material and the curable adhesive or one of them may be substantially co-extensive with the recoverable cover, or may overlie only a certain part of the object while the recoverable cover overlies a larger part. In such an arrangement, the two polymeric layers may be localised around cables adjacent a splice whilst the cover encapsulates the polymeric layers and the splice.

For pipe protection, the thickness of the intermediate layer may be greater than that of the layer of curable adhesive. The intermediate layer of thermoplastic polymeric material may have a thickness of at least 60%, and especially at least 70% of the total thickness of the intermediate layer and the layer of curable adhesive, to give good void-filling properties. However, thinner layers can be used to provide good bonding between the cover and the curable adhesive.

The curable adhesive may comprise a known epoxy compound capable of curing on contact with a suitable curing agent such as an amine at elevated temperatures. Epoxy systems comprising a mixture of both curing components in the form of separate powders, as described and claimed in British Patent Specification No. 2 104 800 are preferred in view of their unusually good combination of long storage life and fast cure.

The preferred monomer-plus-polymer curable adhesive may be formed from a number of curing components selected from known monomers, polymers, free-radical generators and catalysts and formulated to give a curing system having adequate shelf life, curing speed, and cured adhesion characteristics. Any polymer may be used which is compatible with the curable material in the sense that a substantially solid mixture can be prepared in which the polymer does not unacceptably affect the curing. For convenience, the curable material will be hereinafter described with reference to a "monomer", monomers being preferred, although dimers and oligomers may be useful. Any unsaturated monomer, free-radical generator and catalyst may be used which produce the desired curing reaction on contact between the solid coating containing the monomer (and free-radical generator) and the catalyst. Acrylic monomers are preferred, by which is meant acrylic and methacrylic acids and mono-, di-, and multi- (meth) acrylates, e.g. 2-ethylhexylacrylate, tetraethylene glycol dimethacrylate, trimethylol propane trimethacrylate.

The curable monomer/polymer mixture preferably comprises a flowable liquid or semi-liquid acrylic monomer, which may mean so-called oligomers for example polyethylene glycol dimethacrylate or diacrylate, tripropylene glycol diacrylate, 1,6-hexane diol dimethacrylate or diacrylate, polytetramethylene ether glycol diacrylate, polybutadiene diacrylate, polyester-methacrylate, dimethacrylate, vinyl terminated acrylonitrile-butadiene, acrylated epoxidised soyabean oil, trimethylol propane trimethacrylate; and a non-reactive polymer, preferably an acrylic polymer, in sufficient amount and having sufficient viscosity to render the mixture with the flowable monomer substantially solid under ambient storage conditions.

The acrylic polymer referred to above is thermoplastic and may also be elastomeric. For example, polybutyl methacrylate (e.g. Elvacite 2044, Du Pont, or Plexigum P24, Rohm). (These are thermoplastics with a Tg around or above room temperature).

Non-acrylic polymers may be used, e.g. a vinyl acetate - ethylene copolymer, (e.g. VAE711, Wacker, 70% vinyl acetate). This is an elastomer.

Other thermoplastic materials may be useful, e.g. ethylene-vinyl acetate copolymers (EVA) including less than 50% VA, ethylene-ethylacrylate copolymers (EEA), polyethylene-butyl acrylate.

A plasticiser may also be used if required, e.g. N-ethyl-o-,p-toluenesulphonamide (Santicizer 8, Monsanto) or 2-ethyl hexyl diphenyl phosphate (Santicizer 141, Monsanto).

In this connection, it is important that reactive polymers which normally incorporate a certain amount of stabiliser to promote storage stability should not contain such a level of stabiliser as would unacceptably inhibit or stop the curing reaction. For example, commercially available polyisobutylene and polypropylene oxide - alkyl glycidyl ether have been found to inhibit curing of acrylic monomers, whereas polybutyl methacrylate does not, possibly due to its having a lower level of stabiliser or possibly due to incompatibility or too high viscosity of the other polymers. Preferred polymers for use with the preferred acrylic monomers include poly(meth)acrylates, especially polybutylmethacrylate, and vinyl acetate-ethylene copolymers such as the aforementioned VAE711.

The free-radical generator/catalyst system, when a catalyst is used, may be selected according to known criteria to suit the other materials and conditions of use.  Peroxide free-radical generators, e.g. benzoyl peroxide, are suitable, and amine catalysts such as amines, for example N,N-di-methyl-p-toluidine or its saccharin salt, N-phenyldiethanolamine, may be used and/or catalysts such as organic compounds of metals of variable oxidation state, e.g. iron, cobalt, or manganese salts (such as cobalt naphthenate), copper acetylacetonate or vanadium salts may be used.

Proportions in the range from 30 to 0.1% by weight of the aforementioned metal compounds, preferably 5 to 1% by weight, have been found useful in epoxy cured primary layers for use with the preferred acrylic curable adhesives.  If the amine catalysts are used then a range of 25 to 10% by weight is desirable.

The catalyst may be mixed with suitable carriers, binders, corrosion inhibitors, fillers, etc. according to need.  Suitable binders include polyvinyl butyral, VAE, EVA, EAA, EEA, and polybutylmethacrylate.

The relative proportions of the materials in these curable mixtures may be varied widely according to the desired balance of properties before and after curing.  For example, in parts by weight % of mixture.

|          | Widest   | Preferred | Best |
|----------|----------|-----------|------|
| Polymer  | 30-90    | 40-60     | 50   |
| Monomer  | 10-70    | 25-45     | 35   |
| Peroxide | 0.1-10   | 1-5       | 1.5  |

Preferably, the mixture will be formulated to remain somewhat flexible after curing.

Other additives which may be used in known manner and proportions include fillers such as carbon black, (5% preferred), coupling agents such as silanes, plasticisers such as 2-ethylhexyldiphenylphosphate (15% preferred), and corrosion inhibitors such as disodium hydrogen orthophosphate (2% preferred).

In alternative forms of the invention, the catalyst may be included in the curable monomer/polymer mixture and the free radical generator provided separately, but the aforementioned forms with the free-radical generator in the mixture are preferred for optimum curing in practice.

When the pre-formed intermediate layer and the cover are used, the intermediate layer preferably adheres to or is bonded to, the cover. It may adhere or be bonded directly to the cover or one or more layers of other material may be located between the intermediate layer and cover if desired.

The intermediate layer of polymeric material may be formed from a hot-melt adhesive or another reactive adhesive. It has been found that materials that are polar, and especially materials having free acid or basic groups, eg. free carboxylic acid or amine groups, are preferred for forming the intermediate layer since these materials adhere well to the polymeric materials usually used for forming dimensionally recoverable articles and also adhere well to the curable adhesives mentioned above. Preferred materials for forming non-curing intermediate layers include polyamide based hot-melt adhesives, materials based on ethylene-vinyl acetate copolymers having an acid number of at least 5, preferably at least 15, and materials based on ethylene alkyl acrylate copolymers, preferably ethylene-butyl acrylate. The materials may be formed from a single polymeric component that is itself polar or it may have a polar component incorporated therein, in which case the base polymer may itself be polar or non-polar. One such component that may be used with advantage is the ethylene butyl acrylate acrylic acid terpolymer described in UK patent specification 2,075,991A. If the intermediate layer does not adhere to the cover, it may be bonded to the cover by a primer or by another adhesive e.g. a pressure-sensitive adhesive, a cyanoacrylate adhesive or a curable adhesive such as an anaerobic adhesive.

As stated above, the separate intermediate polymeric material (non-curing) preferably has a melting or softening point above that of the curable adhesive. Preferably the difference in temperature is at least 10, especially at least 15 and most especially at least 20°C. The melting or softening point of the intermediate layer will in general depend on the recovery temperature of the cover, the softening temperature range of the intermediate layer and the thermal conductivity of the cover, and should be chosen so that the intermediate layer begins to soften and is sufficiently conformable when the cover has reached its recovery temperature to allow the cover to recover. Thus the softening point as defined above, of the intermediate layer is preferably approximately equal to, or below, the recovery temperature of the cover. In general, it is preferred for the softening point of the intermediate material to be in the range of 30°C below to 10°C above the recovery temperature of the cover. Materials having a relatively broad softening temperature range may have a melting point that is in the range of from 30°C below the recovery temperature of the cover to 30°C above the recovery temperature of the cover although it may be possible to use even higher melting point materials. Thus, if the cover is formed from a polymeric material based on polyethylene and so has a recovery temperature of about 115 to 120°C, an intermediate layer having a melting point in the range of from 90 to 150°C is preferred.

Other useful intermediate layer materials are chlorosulphonated polyethylenes (CSP), a preferred example of which goes by the trade name of Hypalon. CSP may optionally be crosslinked by irradiation or by treatment with a free radical generator-peroxide. CSP's also crosslink at the interface with the adhesives, and after irradiation with the heat recoverable back or cover.

Drapability temperature defines the temperature at which the elastomeric intermediate layer material will substantially readily drape or conform to the shape article it is applied to and its avility to fill voids. The drapability temperature of the intermediate layer will preferably depend on the recovery temperature of the cover, the temperature range for drapability of the intermediate layer and the thermal conductivity of the cover, and/or substrate and should be chosen so that the intermediate layer begins to drape and is sufficiently conformable when the cover had reached its recovery temperature to allow the cover to recover. Thus such point as defined above, of the intermediate layer is preferably approximately equal to, or below, the recovery temperature of the cover. Thus, if the cover is formed from a polymeric material based on polyethylene and so has a recovery temperature of about 115 to 120°C, and intermediate layer having a drapability temperature in the range of from 90 to at least 115°C is preferred. The intermediate layer preferably has a drapability temperature above that of the curable adhesive. Preferably the difference in temperature is at least 10, especially at least 15 and most especially at least 20°C.

The melting or softening point of the uncured curable adhesive will depend on a number of factors including the intended function of the adhesive, the intended installation temperature of the article, the maximum working temperature of the installed article, the stresses applied to the adhesive after installation and the nature of the object to be enclosed. In general, adhesive melting points of not more than 110 and especially not more than 100°C are preferred since the majority of recoverable articles are formed from materials based on polyethylene or ethylene copolymers.

However, the curable adhesive may have a melting point significantly below these values since its melting behaviour will be altered on curing.

It is possible to form heat-shrinkable articles according to the invention that can withstand relatively high temperatures after installation and/or relatively high internal pressures without failure but which can be installed satisfactorily at relatively low ambient temperatures or on objects that act as a large "heat sink", the term "heat-sink" referring to substrates that have a relatively high thermal conductivity and are sufficiently large that they transmit heat away from the adhesive bond line and so prevent the adhesive melting properly. The presence of an adhesive of relatively low melting point that forms a bond with the object enables the article to be installed at relatively low ambient temperatures, but it has surprizingly been found that the performance of the installed article in other respects appears to be enhanced by the presence of a suitable intermediate layer rather than, as would be expected, the intermediate layer detracting from the performance of the curable adhesive. Thus, for example, in certain cases it is possible to form an article which, when installed, will withstand a temperature of 60°C at an internal pressure of 40 kPa but which can be installed at low ambient temperatures. This is particularly surprizing in view of the observation that only very little mixing of the two layers occurs.

In addition to excellent results under static conditions, the article of the invention shows a suprising ability to cycle up to 70°C at pressures up to, say, 40 KPa especially for smaller sizes. Even large size cable splice enclosures can cycle easily up to 30 KPa. Improved creep resistance was also noticed.

The article according to this aspect of the invention has the further advantage that not only may it be installed on objects that are themselves sensitive to high temperatures such as, for example, telecommunication cables having p.v.c., low density polyethylene or ethylene copolymer jackets, but that in many cases, the risk of overheating the object is reduced even with too high an input of heat to the heat-shrinkable cover, as may, for example occur when the article is installed by an unskilled operator. Without in any way limiting the scope of the invention, it is believed that the tolerance of the article to excess heating is due to the fact that once the article has been heated sufficiently to cause adhesive to melt or soften and to cause the intermediate layer to begin to soften, any excess heat applied to the article will be absorbed by the intermediate layer in causing it to melt or soften further, without the temperature of the heat-softenable adhesive rising until the intermediate layer has fully melted. Thus, in a number of cases where the temperature sensitivity of the object to be enclosed is a potential problem it is advantageous for the intermediate layer to be formed from a semicrystalline material.

Yet another advantage of the article according to this aspect of the invention is that, in a number of cases it reduces the total cost of the installed article. by reducing the thickness of the curable adhesive (preferably 0.3 to 3 millimetres) which is generally more expensive than other (hot-melt) adhesives. In other instances, for example where the article is to be recovered over temperature sensitive cables, the necessity for cable protection devices such as described in British Patent Application No. 2075771A is obviated.

Also the article may in a number of cases, be used successfully to cover objects having surface irregularities or a diameter that is less than the diameter of the fully recovered article. This is because the thickness of the intermediate layer increases as the article recovers and so acts as if it increases the size of the object with regard to the cover and, whilst the uncured curable adhesive preferably has a sufficiently low softening or melting point to be able to wet the object to be enclosed,the intermediate layer will preferably have a sufficiently high viscosity during recovery, due to its higher melting or softening point, not to flow away from its intended position between the object and cover.

The curing of the free-radical curable monomer proceeds upon surface-to-surface contact of the monomer/polymer mixture with the catalyst but may if desired be enhanced by application of heat, preferably sufficient to cause the curable mixture to soften or melt and enhance its surface wetting ability. It is an advantage of the present invention that curing of layered constructions using thin curable layers on heat-sink substrates can be surprisingly complete, apparently due to catalytic curing proceeding from the inside together with heat curing proceeding from the outside of the adhesive layer. On the other hand, these same mechanisms can be used to produce the layered structure referred to above by using relatively thick curable adhesive layers, e.g. above 3 millimetres, preferably above 10 millimetres, more preferably above 25 millimetres or even above 50 millimetres in thickness.

The recoveralbe articles according to the invention may be formed in a number of configurations for example in the form of hollow tubular articles that are made by moulding or extrusion, or in the form of sheet or tape. For some articles it may be desirable to coat one entire surface with both layers whilst for other articles it may be necessary or desirable only to coat certain parts of the article with both layers and to leave other areas uncoated or coated with only one of the layers.

Thus, for example, the article may be in the form of a wraparound device as described in U.K. patent No. 1,155,470 and as mentioned above.

Where a bond is necessary only at the ends of the sleeve, the adhesive may be provided as strips at each end of the sleeve. The adhesive will thus provide not only a mechanically strong bond between the sleeve and the substrate, but also a seal to prevent the passage of fluid.

In addition to providing bonding and sealing, the adhesive layers at the ends also can provide a build-up of diameter to match the size of the sleeve and can protect the substrate from the heat or mechanical streses arising during recovery.

For pipeline protection, the article is preferably in the form of a "wrap-around" sheet to be wrapped around the substrate and suitably fastened, e.g. by adhesive, preferably an adhesive patch.

The sheet material preferably is recoverable to an extent of at least 10%, more preferably 20 - 40%, and preferably not more than 50% of its unrecovered dimensions. A recovery of about 30% provides adequate compression to promote good sealing contact and cure when the sheet is initially wrapped closely around the substrate, preferably in a "cigarette wrap" configuration to minimise the length of overlapping sheet edge and thus minimise potential leakage paths, and will nevertheless allow an adhesive patch closure of the wrapped around ends of the sheet to remain in position after recovery of the sheet. Recovery of more than 50% tends to overcome the adhesive bond of such a closure, although higher recovery may be used if the sheet is initially wrapped more loosely around the substrate.

A preferred form of sheet carries the monomer/ polymer mixture on one of its main surfaces and the catalyst on its other main surface, at least in those areas which are to be overlapped by the mixture-coated surface in use, so promoting curing of the mixture in the overlap areas to minimise leakage and promote sealing and bonding. The catalyst can be applied to the required areas either during manufacture of the sheet or subsequently, for example, immediately before or during installation on the substrate.

Methods of producing the articles carrying the curable adhesive and intermediate layer can readily be devised by persons familiar with polymer extrusion and coating technology. It has, however, been found advantageous that the preferred acrylic polymer/monomer mixture can be prepared by standard mixing techniques using liquid monomer without added solvent to give an appropriate viscosity for coating and the mixture, without heating or other treatment, then gels and becomes substantially solid after coating onto a suitable polymer sheet. Known coating methods, doctor blade for example, may be used, preferably to give a finished solid coating of thickness within the range from 0.3 to 3.0 mm, preferably 0.5 mm to 1.5mm. The catalyst can also be applied to the other surface of the sheet by standard techniques, for example brush spray or roller coating.

Several embodiments of the article according to the invention will now be described with reference to the accompanying drawings in which:

Figures 1 to 3  are schematic transverse sections through part of three different articles according to the invention in the form of wraparounds; and

Figures 4 and 5 show tubular articles around a cable splice.

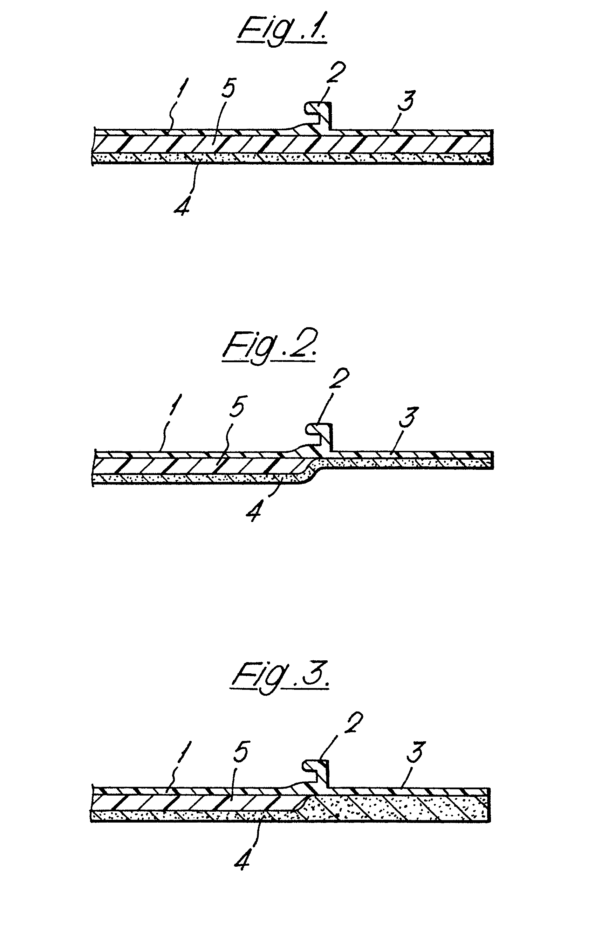

Referring to the accompanying drawings, figures 1 to 3 show an edge portion of a heat-recoverable wrap-around article having the general closure configuration as described in U.K. patent No. 1,155,470 although other closure arrangements could be used or the article may be tubular. The article comprises a dimensionally recoverable cover 1 part of which is shown, the cover being provided with a longitudinally extending rail 2 and a flap portion 3. When the article is to be installed, it is wrapped around the object and the corresponding edge portion (not shown) of the cover which is provided at its edge with a corresponding rail, is caused to overlie the flap portion 3 so that the two rails are in abutment. The installer then slides a channel over the rails to maintain them in abutment and heats the cover for example with a gas torch in the direction of the arrows shown in figure 1, to cause it to recover tightly about the object.

The article is provided with a layer 4 of a curable adhesive as specified hereinbefore and an intermediate layer 5 of a thermoplastic material, the thickness of the layers 4 and 5 being exaggerated for the sake of clarity. The intermediate layer 5, preferably formed from a hot-melt adhesive, has an initial softening point in the region of the recovery temperature of the cover 1 and the uncured curable layer 4 has a melting or softening point, as hereinbefore defined, that is at least 10°C below the melting or softening point ($T_{60}$) of the intermediate layer 5. The average thickness of the intermediate layer is approximately three times that of the curable adhesive layer, and the total thickness of both layers is approximately 0.4 to 1.4 mm preferably 0.6 to 1.2mm.

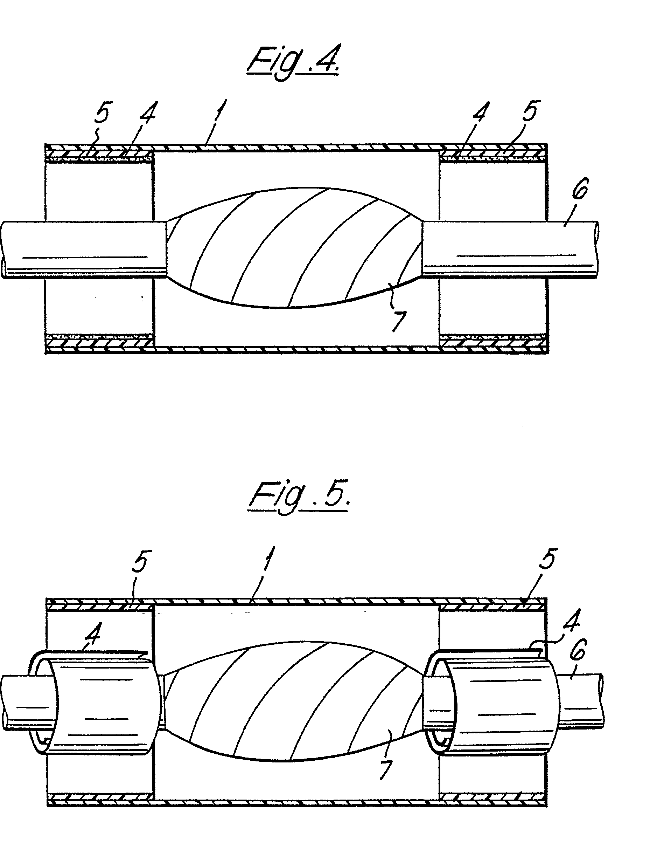

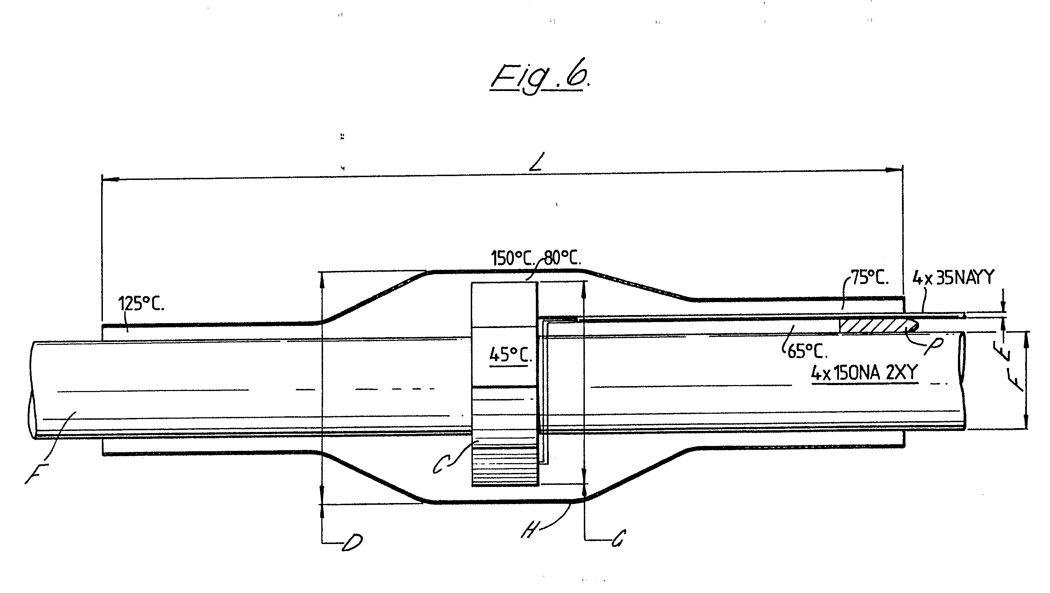

As shown in Figure 1, both layers extend over the flap portion 3 of the article. This arrangement is suitable for systems in which no problems are encountered with heating the curable layer 4 under the flap portion. Figures 2 and 3 show modifications in the design of the article which are suitable in circumstances in which it may be essential to heat the curable layer 4 under the flap portion due to the presence of the overlying part of the cover. Such circumstances may exist when the ambient temperatures are particularly low or if it is not possible to pre-heat the object to be enclosed. In the modifications shown in figures 2 and 3, the intermediate layer 5 ends at the rail 2 and only the curable layer 4 extends along the flap portion 3 either with constant thickness of the curable layer as shown in figure 2 or with the total thickness of adhesive being constant as shown in figure 3.

Figures 4 and 5 show tubular articles having localized regions of curable layer 4 and intermediate layer 5 around a splice 7 between cables 6. The article 1 may of course be of wrap-around form for this application or for use with this configuration of adhesive layers. The article 1 is shown before recovery, and after recovery it will conform to the size and shape of the cable splice or of a liner if such is provided. In Figure 4 the two layers 4 and 5 are carried by the article 1, whereas in Figure 5 the layer 4 is provided separately, for example as an adhesive wrap.

The following Examples illustrate the invention. for installation and curing onto a 63.5 millimetre diameter steel pipe which was maintained at 50°C by hot oil flowing through the pipe.

The adhesive consists of:-

1. a free radical generator, tertiary-butyl perbenzoate
2. an acrylic polymer, polybutyl methacrylate (Plexigum P24 Rohm)
3. an acrylic monomer, either 1,6-hexane diol dimethacrylate (SR 239 Sartomer) or an acrylate terminated oligomer with an average chain length of approximately C14-15 (Chemlink 2000 Sartomer).

|                      | Ex. 1  | Ex. 2  | Ex.3  |
|----------------------|--------|--------|-------|
| SR 239               | 35     | 14     | -     |
| Chemlink 2000        | -      | 21     | 35    |
| t-butyl perbenzoate  | 2 1/2  | 2 1/2  | 2 1/2 |
| Plexigum P24         | 65     | 65     | 65    |
| Termax Black         | 1      | 1      | 1     |

The curable adhesive was applied to a heat shrinkable polyethylene backing carrying an intermediate layer of a hot-melt adhesive based on EEA and polyethylene wax. The curable adhesive was prepared by pouring the powdered acrylic polymer into a solution of the free radical generator in the acrylic monomer and stirring by hand to form a low viscosity solution. After a period of 1-10 hours, depending on the type and concentration of the monomer/polymer used, the viscosity of the solution increases to become substantially solid at ambient storage conditions. Immediately after mixing the components of the adhesive the low viscosity solution was coated onto the intermediate layer using a hopper-coating technique and allowed to solidify at ambient temeprature. This method of manufacture is advantageous because of its low heat input.

The adhesive was installed onto the pipe by first priming the pipe surface with an activator catalyst for the free radical generator. The adhesive coated backing was then wrapped around the pipe and the backing recovered using a gas torch. Thermocouples placed between the pipe surface and the adhesive showed a minimal increase, about 5-10°C, in the temperature of the adhesive over the ambient temperature of the pipe (50°C) during recovery of the backing.

The sleeves were inspected after 16 hours, samples which were recovered onto the activator catalyst had bonded to the pipe surface, the adhesive layer had cured to a hard layer which could only be removed from the pipe with difficulty using chisel. Samples recovered onto bare steel were not cured and the backing/intermediate layer/adhesive was easily removed from the pipe.

It has been found that the two acrylic monomers, SR 239 and Chemlink 2000, produce adhesives which have different properties when cured. Adhesives based on SR 239 bond well to steel but tend to be brittle whereas adhesives based on Chemlink 2000 are much more flexible

0152213
RK194COM

at 50°C but do not bond as well to steel. Therefore if a tough, rubbery adhesive is required then the two monomers may be blended together as in Example 2.

Example 4

A Hypalon intermediate layer was made as follows:

50% Hypalon (from Dupont)

15% Piccofyn (tackifier)

5% SP553 (tackifier)

10% Statex 160 (carbon black)

6.25% Maglite (acid acceptor)

3% Chlorowax (Plasticizer)

.5% Triallylisocyanurate (crosslink enhancing agent)

.25% Antioxident (such as a hindered phenolic antioxident)

10% Vistanex (Paraisolintalene rubber) 100%

A steel oil pipe is first coated with Koppers Organic Zinc primer system then covered with an epoxy adhesive system or alternatively with an acrylic adhesive system. The above Hypalon layer is then placed next followed by a polymeric heat shrinkable cover which is then heat shrunk. The Hypalon may be further cross linked by irradiation. These systems exhibit improved peel strength, shear strength, and cathodic disbondment resistance.

Example 5

The Hypalon, polymer and adhesive Layer of Example 4 are used except the layers are laminated together with heat prior to application to the pipe.

When the aforementioned activator catalyst is applied to the article to be enclosed, it may be advantageous to incorporate the catalyst in a layer of at least partly cured polymeric material, in which connection another aspect of this invention provides a protective covering for an object comprising a primary layer of at least partly cured polymeric material adhering to a surface of the object and a secondary cover of polymeric material applied as or on a pre-existing self-supporting article to the primary layer on the object, the cover preferably comprising curable polymeric material and the primary layer preferably containing a catalyst which catalyses curing of the curable material on contact with the primary layer.

It has been found that this combination of a cured primary layer with an overlying secondary polymer cover can provide an advantageous balance of protective characteristics to the object thus covered, especially in the case when the primary layer is at least partly cured, preferably to a substantially tack-free state, before application of the cover, which is preferably heat-recovered into contact therewith. The curable material of the cover may be an adhesive by which the cover is adhered to the primary layer. The adhesive will preferably be precoated on the secondary cover but may be independantly applied to the primary layer.

The adhesive will preferably be curable, and it has been found that curing of suitable adhesives can be catalysed by appropriate materials included in the primary layer, surprisingly regardless of the fact that the primary layer may be partly or completely cured before the adhesive makes contact with it.

Any curable composition may be used to form the primary layer on the object, examples including epoxy-functional materials, phenolic, acrylic, styrenic, urethane or silane resins, with suitable known curing agents for such systems. Preferred primary layer materials comprise epoxy materials, for example epoxy-functional bis-phenol A resins, epoxy-cresyl novolaks, and epoxidised butadiene-acylonitrile elastomers, which may be cured by polyamides, polymercaptons, polyols, free amines or other known curing agents. The primary layer may be precoated on the object, for example on a section of pipe as supplied for installation in a pipeline, or may be applied to the object immediately before application of the secondary cover, for example by applying and curing the primary layer materials to a section of already installed pipeline.

The cured primary layer may include protective additives in addition to the curing components, for example corrosion resisting additives, and will preferably include the aforementioned materials which catalyse curing of a curable adhesive when used to adhere the secondary cover to the primary layer. The catalyst materials may readily be selected by simple trial and error to suit the curable adhesive used.

Curable adhesive systems for adhering the secondary cover to the primary layer can be selected according to the service requirements of the covered object in question, known curable systems including those mentioned above.

To exemplify this aspect of the invention, Examples 1 to 3 were repeated to provide Examples 6 to 8, after first priming the pipe surface with a curable composition comprising:

| | |
|---|---|
| DER 662 Epoxy resin from Dow Chemical | 40% |
| Z6040 Silane Coupler from Dow Corning | 2% |
| Townend Solvent Black SLR(dye) | 2% |
| Vanadyl acetyl acetonate (activator catalyst) | 2% |
| Versamid 140 polyamide from Henkel | 7% |
| Methyl Ethyl Ketone solvent | 14% |
| Toluene solvent | 33% |

This coating thus contains an activator catalyst for the free radical generator, and this composition was cured to a substantially tack-free state by heating at 50°C for 30 minutes. The adhesive coated cover was then wrapped around the pipe and recovered using a gas torch. Thermocouples placed between the pipe surface and the adhesive showed a minimal increase, about 5-10°C, in the temperature of the adhesive over the ambient temperature of the pipe (50°C) during recovery of the backing.

The sleeves were inspected after 24 hours. Samples which were recovered onto the activator catalyst had bonded to the pipe surface and the adhesive layer had cured to a hard layer which could only be removed from the pipe with difficulty using chisel. Samples recovered onto bare steel were not cured and the cover/ intermediate layer/adhesive was easily removed from the pipe.

Example 9

Materials

ATM5          polyethylene glycol dimethacrylate, M.W.
              330, Ancomer.
Santomer 210  polyethylene glycol dimethacrylate, M.W.
              330, Santomer.
Santicizer 141 2-ethyl hexyl diphenyl phosphate
              Monsanto.
Plexigum P24 polybutyl methacrylate, Rohm.

|                              | Parts by wt | g   |
|------------------------------|-------------|-----|
| Plexigum P24                 | 45          | 900 |
| VAE 711                      | 5           | 100 |
| Sartomer 210                 | 30          | 600 |
| Santicizer 141               | 15          | 300 |
| tertiary butyl peroxy benzoate | 2.5       | 50  |

The premixed Plexigum P24 and VAE 711 (coarse powders) were added with hand stirring to the premixed Sartomer 210, Santicizer 141 and tertiary butyl peroxy benzoate liquids, and stirred to break down any aglomerates. The paste was poured into a 100mm X 150mm X 1.5mm mould on heat-shrinkable polyolefin/EVA sheet (30% free recovery) and a doctor blade passed across the mould to give a 1.5mm thick coating on the sheet. A sheet of siliconised paper was laid over the adhesive. After 1 hour the adhesive had 'gelled' and the siliconised paper could be peeled off. The adhesive was bonded to steel as follows using a primer solution of cobalt (II) acetylacetonate (2 pts) and N,N-dimethyl -p-toluidine (23 pts) plus 25 parts Versamid 140 and 50 parts of Epikote 828 epoxy from Shell Chemicals.

A 63.5 millimetre diameter mild steel tube of 6 millimetres wall thickness was grit blasted then degreased with methyl ethyl ketone. The steel was then primed with the solution and the resulting coating cured by heating for 8 hours at 50°C.

The adhesive-coated sheet was wrapped around the steel rod and held as a complete tube by means of an adhesive patch. The sheet was then recovered by heating with a gas torch, and the bond left 48 hrs at 50°C. After the 48 hrs the sheet was cut open. The adhesive was found to have cured and formed a bond between the primed steel and the backing sheet.

Example 10

As Ex. 9 except that N-phenyl diethanolamine was used in place of N,N-dimethyl-p-toluidine in the primer. The results were similar.

******

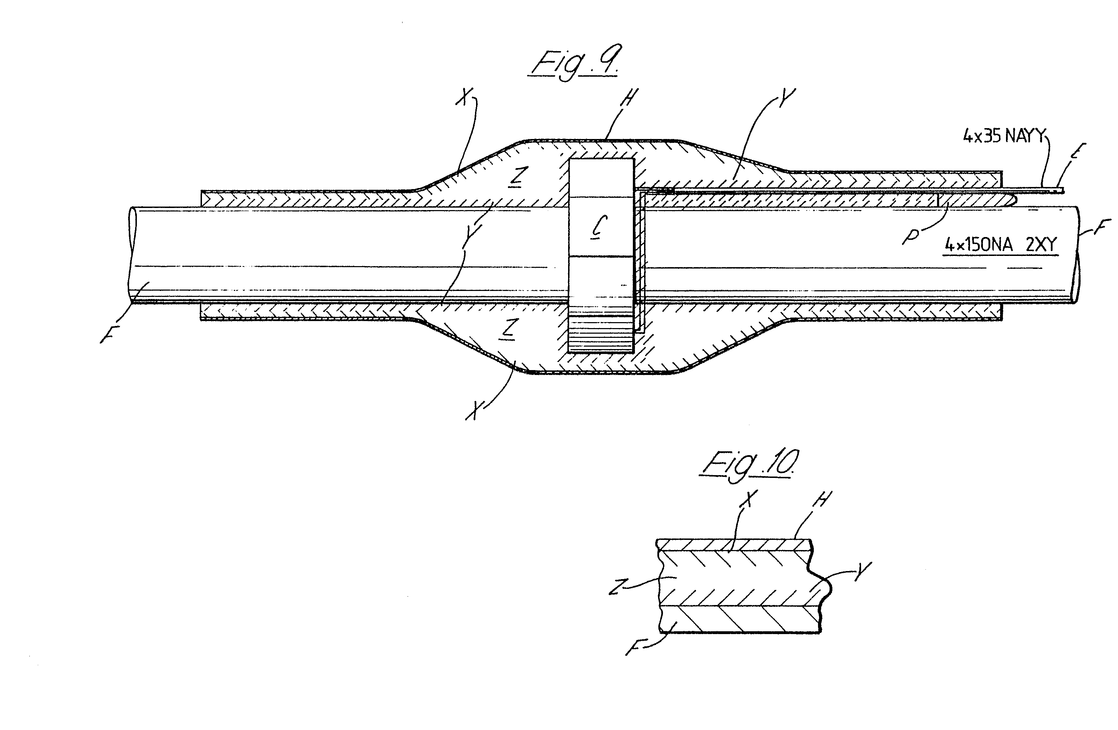

According to another aspect of the invention, a 1KV power cable splice (dimensions in Figure 6) has an adhesive system capable of being installed during heat shrinking of a polymer sleeve thereover to give flow and wetting of the interstices of the joint to provide an environmental seal which can withstand elevated temperatures such as can occur during overload conditions (e.g. 90°C). The major advantage of this embodiment of the invention is that the large bulk of adhesive used (circa 1 Kg), together with the low bondline temperatures on the cable and connector, (e.g. 40-50°C as is shown in the temperature profile Figure 6), produce a graduated level of cure, resulting in the desired layered structure. The system provides a handleable adhesive (precoated, a tape wrap or a pre-shaped insert) which can soften and flow at moderately low temperatures (e.g. 40-50°C) to provide the seal, but where the surface has been primed with activator catalyst as mentioned above curing occurs at these low temperatures to give a non flowing/environmentallysealing system during overload. The adhesive seal can survive 63 temperature change sycles between ambient temperature and 90°C. A typical installation is sequentially shown, by way of Example, in Figures 7 to 9 of the accompanying drawings. In addition the adhesive immediately under the heat shrink article cures (by heat decomposition of the peroxide) to give stratified sandwiched layers of adhesive through the joint as shown in Figure 9, with a typical section shown in Figure 10 having a heat shrunk backing (H), heat cured adhesive (X), uncured adhesive (Z), primer cured adhesive (Y), and cable or connector surface (F).

The uncured adhesive may provide additional properties to the splice enclosure such as
1. Impact resistance.
2. Sealing capability for damaged surfaces.

With single component adhesive systems (see formulation A) the initially uncured adhesive layere will cure slowly with time (unless stabilised with a radical scavanging agent such as hydroquinone) to eventually give a homogeniously cured structure, such temporarily layered structures being within the scope of the invention.

However, a permanently stratified structure can be produced by using layered adhesive tapes or chunks (see formulation B) which when fully cured have varying properties/stratified layers, giving mechanical properties which may range, for example, from rubbery (for impact) to hard (for rigidity), and varying chemical properties so as to have controlled affinity for various surfaces.

Details of an exemplary cable splice and typical formulations which fulfill the above requirements are given below. With two or more component tapes the cured properties can be further controlled by varying any or all of the following:-

1. Peroxide level and type controls temperature of and rate of reaction, final crosslink density etc.

2. Functionality of monomer; mono-functional resins impart more flexibility than corresponding multifunctional resins by controlling the crosslink density.

3. Flexibility can be improved by incorporating non reactive elastomers.

4. Rigidity can be improved by use of fillers and reinforcing agents

5. Flexibility can be imparted by using oligomers with flexible backbones such as polyurethane acrylate, or vinyl terminated rubbers.

0152213

6.  Rigidity can be enhanced by oligomers with rigid backbones such as Bisphenol A type acrylates (epoxy acrylates).

7.  Reaction rate can be controlled by choice of monomer/oligomer as methacrylates are slower curing than acrylates.

8.  Affinity for certain surfaces may be controlled by monomer/oligomer selection, e.g. adhesion to polyethylenes is better with stearyl- or lauryl-based monomers whilst metals are better bonded by more polar monomers, e.g. 1,6-hexanediol dimethacrylate.

<u>1KV SPLICE EXAMPLES</u>

CABLES :- PVC, HDPE, XL HDPE
HEAT SHRINKABLE JACKET:- Polyethylene.
DIMENSIONS OF JOINT - see Figure 6.
Typical temperature profile on heat-shrink installation - see Figure 6.
Typical 1 part formulation <u>Example 11</u>.

| INGREDIENT | TRADE NAME | PARTS BY WEIGHT |
|---|---|---|

ADHESIVE

| Poly Butyl Methacrylate | P24 | 57 |
| 1,6 Hexane dioldimethacrylate | SR239 | 25 |
| Vinyl Acetate Elastomer | VAE711 | 2.5 |
| Ethyl Hexyl phosphate | Santiciser 141 | 10 |
| Tert Butyl Peroxy Benzoate | TBPB | 2.0 |

PRIMER. (applied to enclosed article to promote cure from inside.

| Toluene. | | 30 |
| Chlorinated Polyethylene | CPE3614 | 60 |
| Cobalt octoate | | 10* |

* content can be varied to control cure rate and crosslink density.

TYPICAL 2 PART FORMULATION Example 12

| RIGID ON CURE | | RUBBERY ON CURE | |
|---|---|---|---|
| Ingredient | P.B.W. | Ingredient | |
| SR 239 | 25 | Steryl Methacrylate | 25.0 |
| P 24 | 53 | P 24 | 53 |
| S 141 | 10 | S 141 | 10 |
| VAE 711 | 2 | VAE 711 | 2 |
| Silica Filler | 1.5 | Silica | 1.5 |
| TBPB | 2.0 | TBPB | 0.5 |

The same primer may be used as in Example 11, or a more reactive primer, e.g. of the CPE3614 in saturated toluene solution as above but replacing half of the cobalt octoate with N,N-dimethyl-p-toluidine.

These two tapes can be cold laminated together to give a bicomponent tape or the two layers may be coated onto a heat shrinkable sheet. They remain stable during storage and are activated either by heat or by chemical motivation.

The adhesive ingredients may be blended and extruded into tape or shaped into chunks by known methods which workers in this field of technology will have no difficulty in selecting and using to suit the materials in question.

The curable compositions for electrical insulation purposes may include red iron oxide, e.g. in amounts from 1 to 5% based on the weight of curable polymer or oligomer present.

Further examples of curable formulations follow, the materials indicated being as follows:-

Peroxides

| TBPB | Tert Butyl Peroxy Benzoate | ) | |
|------|----------------------------|---|----------------|
| CHP | Cumene hydroperoxide | ) | Noury Chemicals |
| BP | Benzyl Peroxide | ) | |

Monomers

| SR239 | 1,6 Hexanediol dimethlacrylate | Sartomer | | |
|-------|-------------------------------|----------|----|------|
| SMA | Stearyl methacrylate | " | or | Rhom |
| LMA | Lauryl methacrylate | " | " | " |
| SR313 | Stearoyl methacrylate | " | " | " |

## Oligomers

| | | |
|---|---|---|
| C 2,000 | Acrylated oligomer | ) Sartomer or |
| C 2,100 | Methacrylated oligomer | ) Anchomer |
| Photomer 3005 | Acrylate of an epoxidised oil | ) |
| Photomer 6140 | Polyester urethane acrylate | ) Diamond Shamrock |
| Photomer 3016 | Acrylated epoxy | ) |

## Base Polymer

| | | |
|---|---|---|
| P24 | Poly Butyl Methacrylate | Rohm Chemicals |

## Plasticisers/Rubber modifiers

| | | |
|---|---|---|
| S.141 | Ethyl Hexyl Phosphate | Monsanto |
| VAE 711 | Vinyl acetate elastomer | Wacker Chemie |
| Mycer 1312 | Polybutadiene rubber | BR Goodrich |
| CPE 3016 | Chlorinated polyethylene | Bayer Chemicals |

## Fillers & Colourants

| | | |
|---|---|---|
| Thermax black | Carbon black | |
| Aerosil 200 | Fumed silica | Dequssa |
| Solvent Black | black dye | Townsend Chemicals |

## Stabilisers

| | | |
|---|---|---|
| Hydroquinnone | - | Aldrich |

## Primers/Accelerators

| | | |
|---|---|---|
| Cobalt Octoate | - | Durham |
| " " | solution 10% in white spirit | " |
| N,N-dimethyl para toluidine | | Aldrich |

BLENDS USING DIAMOND SHAMROCK PHOTOMERRESINS

Examples 13 to 18:

|        | CONTROL | 13   | 14   | 15   | 16   | 17   | 18   |
|--------|---------|------|------|------|------|------|------|
| SR239  | 35      | 30   | 25   | 20   | 15   | 10   | 5    |
| P24    | 62.5    | 62.5 | 62.5 | 62.5 | 62.5 | 62.5 | 62.5 |
| TBPB   | 2.5     | 2.5  | 2.5  | 2.5  | 2.5  | 2.5  | 2.5  |
| P3016  |         | 5    | 10   | 15   | 20   | 25   | 30   |

Examples 19 to 24: as Examples 13 to 18 but replacing P3016 with P6140 in same ratio.

Examples 25 to 30: as Examples 13 to 18 but replacing P6140 with P3049 in same ratio.

Examples 31 to 36

|                      | 31  | 32  | 33   | 34  | 35  | 36  |
|----------------------|-----|-----|------|-----|-----|-----|
| Stearyl Methacrylate |     |     |      | 25  | 25  | 25  |
| SR239                | 25  | 25  | 25   |     |     |     |
| P24                  | 53  | 53  | 53   | 53  | 53  | 53  |
| S141                 | 10  | 10  | 10   | 10  | 10  | 10  |
| VAE 711              | 2   | 2   | 2    | 2   | 2   | 2   |
| Aerosil 200          | 1.5 | 1.5 | 1.5  | 1.5 | 1.5 | 1.5 |
| TBPB                 | 2   | 2   | 2    | 2   | 2   | 2   |

Examples 37 to 45

|       | 37 | 38 | 39 | 40 | 41 | 42 | 43 | 44 | 45 |
|-------|----|----|----|----|----|----|----|----|----|
| SR239 | 30 | 30 | 30 | 30 | 30 | 30 | 30 | 30 | 30 |
| S141  | 35 | 35 | 35 | 35 | 35 | 35 | 25 | 35 | 15 |
| P24   | 10 | 20 | 30 | 40 | 40 | 40 | 40 | 40 | 40 |

Example 46

| | |
|---|---|
| SR 239 | 25 |
| P24 | 60 |
| TBPB | 2 |
| S141 | 10 |
| Red Iron Oxide 2% | |

Examples 47 to 52

| | 47 | 48 | 49 | 50 | 51 | 52 |
|---|---|---|---|---|---|---|
| Stearyl Methacrylate | 25 | 21.25 | 18.75 | 16.25 | 13.75 | 12.5 |
| SR239 | | 3.75 | 6.25 | 8.75 | 11.25 | 12.5 |
| P24 | 53 | 53 | 53 | 53 | 53 | 53 |
| S141 | 10 | 10 | 10 | 10 | 10 | 10 |

A. Formulations for one-component tapes (stratified on Curing).

Example 53

| | P.B.W. | |
|---|---|---|
| SR239 | 25 | Cures to give rigid properties |
| P24 | 53 | |
| S141 | 10 | |
| VAE 711 | 5 | |
| TBPB | 2 | |

Example 54

| | P.B.W. | |
|---|---|---|
| SR239 | 10 | Cure to give rubbery/flexible |
| Steryl metacrylate | 20 | properties |
| P24 | 53 | |
| S141 | 10 | |
| VAE 711 | 2 | |
| TBPB | 0.5 | |

Example 55

| | |
|---|---|
| Chemlink 2,000 | 25 |
| P24 | 53 |
| S141 | 10 |
| VAE 711 | 5 |
| CMP | 2 |

Cure to give rigid properties with improved $H_2O$ resistance over 1.

Example 56

| | |
|---|---|
| Photomer 3005 | 25 |
| P24 | 53 |
| S141 | 10 |
| Benzl Peroxide | 2.5 |

Gives flexible material with lower activation temperature

Example 57

| | |
|---|---|
| Chemlink 2100 | 25 |
| P24 | 53 |
| S141 | 10 |
| VAE 711 | 5 |
| TBPB | 2 |

Cures to give properties like A3 but is slower curing as it is a methlacrylated system

Primer in all cases (Paintable)

| | |
|---|---|
| Toluene | 30 |
| CPE | 60 |
| Cobalt naphenate | 1 |

B. Formulations for two-component tapes (stratified before curing).

Example 58

| Rigid properties | Soft properties |
|---|---|
| as Example 53 | as Example 54 |

## Example 59

| Rigid properties | Rubbery soft properties | |
|---|---|---|
| as Example 53 | SR239 | 25 |
| | P24 | 53 |
| | S141 | 10 |
| | VAE711 | 20 |
| | Hydro Quinnone (700 ppm) | |
| | ( remains on cured permanently) | |

## Example 60

(for stress relief)

| Slow curing rigid prop. | Soft Properties |
|---|---|
| as Example 57 | as Example 54 |

## Example 61

| Rubbery properties | Rubbery Properties | |
|---|---|---|
| with affinity towards | being more polar with | |
| poly olefinic surfaces | affinity towards metals | |
| | | |
| as Example 54 · | SR239 | 25 |
| | P 24 | 53 |
| | S 141 | 10 |
| | VAE 711 | 20 |
| | TBPB | 1 |

Primer as in "A "series

Formulation of two separate strips laid together prior. to installation (no primer)

Example 62

|       | A       |     |       | B       |     |
|-------|---------|-----|-------|---------|-----|
|       | SR239   | 25  |       | SR239   | 25  |
|       | P24     | 53  |       | P24     | 20  |
|       | S141    | 10  |       | CPE     | 33  |
|       | VAE711  | 2.5 |       | S141    | 10  |
|       | TBPB    | 2.0 |       | Co Octoate | 1.0 |

0152213

With reference to Figures 6 to 10 of the accompanying drawings, figure 6 shows schematically a 1KV cable splice enclosure having a length L of 400-450 millimetres and a maximum diameter D of 120-150 millimetres, in which a small cable of diameter E (about 3 millimetres) is spliced with, or "broken out" from, a larger cable of diameter F (about 50 millimetres). A connector C of known metal/plastics construction is shown, having a diameter G of about 100 millimetres, and the enclosure has a heat-shrinkable outer cover H which may be imagined as having been recovered about the cables and connector to the extent permitted by a filling of curable material (not shown). A clip P is indicated schematically holding the cover H together between the two cables (E, F) to ensure good sealing of the enclosure by the polymeric material.

The temperatures indicated in degrees Celsius are typical temperatures encountered at the indicated positions during.heat recovery of the cover about the cable splice.

Figure 7 shows a stage in the making of the Figure 6 enclosure, wherein a tape T of curable material is being wrapped around the single cable F on one side of the connector C, while suitably pre-shaped chunks Q of the curable material are being inserted into the more irregularly-shaped cavities around the two cables E and F on the other side of the connector C.

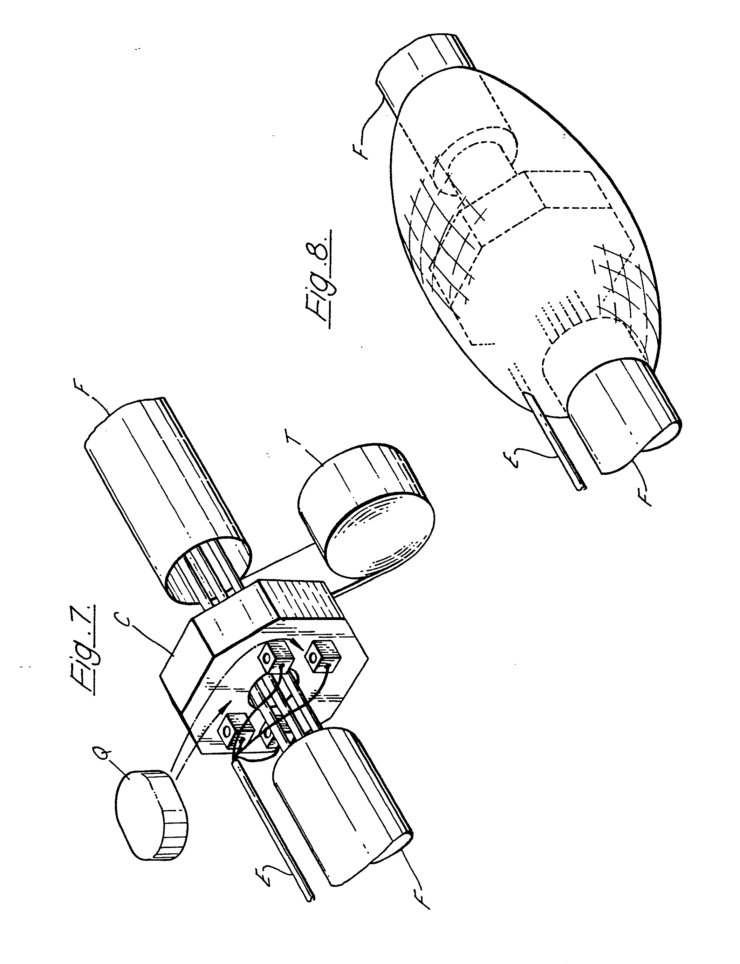

Figure 8 indicates the general profile of the curable material (approx 0.8 - 11.5 kg in weight) after further layers of tape have been wrapped over the tape

0152213
RK194COM

and chunks shown in Figure 7. and Figures 9 and 10 show the resulting pattern of cure when the cover H is heat-recovered over the curable material. an activator catalyst primer (not shown) having been applied to the cables and connector before application of the curable material thereto. Cured material X results from the application of heat: cured material Y from the action of the primer· and uncured layer Z remains at least temporarily between owing to the thickness and/or different layering of the adhesive. as aforesaid. Of course simple unbranched splices or terminations of single cables can equally well be made in accordance with this aspect of the invention. for example by omitting the second cable E and the clip P from the example illustrated in Figures 6 to 10.

CLAIMS:

1.      An enclosure comprising substantially solid heat-flowable polymeric material at least partly enclosing at least part of an article which polymeric material comprises curable material and has sufficient thickness and/or layers of different materials to provide, at least temporarily after curing of the curable material, a layered cured structure, provided that, when the heat-flowable polymeric material comprises a layer of thermoplastic polymeric material overlying a substantially solid layer of the curable material enclosing the article, the curable material comprises (a) an epoxy compound or (b) a mixture of a free-radical-curable material, a polymer and a free-radical generator or an activator catalyst for such a generator.

2.      An enclosure according to claim 1, including a cover which encloses at least part of the heat-flowable polymeric material.

3.      An enclosure according to claim 2, wherein the cover comprises dimensionally heat-recoverable polymeric material and the heat-flowable polymeric material is heat-flowable at temperatures which it will encounter during heat-recovery of the cover about the said article.

4.      A method of enclosing an article comprising (1) making an enclosure according to claim 1, by placing the heat-flowable polymeric material so as at least partly to enclose at least part of the article, and (2) curing the curable material to produce the layered cured structure.

5.      A method according to claim 4, wherein the heat-flowable material is heated to a flowable state before or during curing and is physically constrained to remain around the enclosed article.

6.      A method according to claim 5, wherein the physical constraint is provided by a cover which encloses at least part of the heat-flowable polymeric material.

7.      A method according to claim 6, wherein the cover comprises dimensionally heat-recoverable polymeric material and the heat-flowable polymeric material is rendered flowable during heating to recover the cover about the enclosed part of the article.

8.      An enclosure or method according to any of the preceding claims, wherein the heat-flowable polymeric material is curable throughout and comprises substantially only one material.

9.      An enclosure or method according to any of claims 1 to 7, wherein the heat-flowable polymeric material is curable throughout and comprises at least two layers of materials having different chemical compositions or different molecular weights.

10.     An enclosure or method according to any of claims 1 to 7, wherein the heat-flowable polymeric material comprises at least one layer of curable material and at least one layer of thermoplastic or elastomeric polymeric material.

11. An enclosure or method according to claim 10, wherein the layer of curable material is between the thermoplastic or elastomeric layer and the article.

12. An enclosure or method according to claim 11, comprising a second layer of curable material with the thermoplastic or elastomeric layer between the two curable layers.

13. An enclosure or method according to any of claims 10 to 12, wherein the thermoplastic or elastomeric layer comprises a polyamide hot melt.

14. An enclosure or method according to any of claims 10 to 12, wherein the thermoplastic or elastomeric layer comprises a chlorosulphonated polyethylene.

15. An enclosure or method according to any of the preceding claims, wherein means are provided for initiating curing outwards from the enclosed article.

16. An enclosure or method according to claim 15, wherein the initiating means comprises an activator catalyst carried by the enclosed article.

17. An enclosure or method according to claim 16, wherein the catalyst is incorporated in a layer of at least partly cured polymeric material adhering to a surface of the enclosed article.

18. An enclosure or method according to any of the preceding claims, wherein the curable material is cured.

19.     An enclosure or method according to any of the preceding claims, wherein the layered cured structure comprises at least one layer which is significantly more flexible than at least one other layer thereof.

20.     An enclosure or method according to any of the preceding claims, wherein the heat-flowable polymeric material is more than 3 millimetres, preferably more than 10 millimetres, more preferably more than 25 millimetres thick, at least in places, in a sense normal to the surface of the enclosed article.

21.     An article for use in an enclosure or method according to any of the preceding claims, comprising a self-supporting body of the heat-flowable polymeric composition shaped to be positioned without significant bending next to the relevant part of an article to be enclosed.

22.     An article for use in an enclosure or method according to any of the preceding claims 1 to 20, comprising a self-supporting wrappable tape or sheet of the heat-flowable polymeric material.

23.     A kit of parts for use in forming an enclosure or practising a method according to any of claims 1 to 20, comprising at least one article according to claim 21 or 22, and a cover capable of constraining the heat-flowable material to remain around the enclosed article when heated to a flowable state.

24.     A kit according to claim 22, wherein the cover is dimensionally heat-recoverable.

25.     An article for enclosing at least part of an object which comprises a dimensionally recoverable cover that is adapted to be recovered about the object and has, extending over at least part of a surface of the cover which will face the object in use, a substantially solid layer of a curable adhesive comprising (a) an epoxy compound or (b) a mixture of a free-radical-curable material, a polymer and a free-radical generator or an activator catalyst for such a generator, the article being provided with an intermediate layer comprising heat-softenable polymeric material located between the cover and the adhesive.

26.     An article for enclosing at least part of an object which comprises an outer layer of a dimensionally recoverable cover that is adapted to be recovered about the object and has an intermediate layer comprising a chlorosulfonated polyethylene, and an innermost layer of curable adhesive.

27.     An article according to claim 26, wherein the intermediate layer has a drapability temperature above that of the adhesive layer.

28.     An article, enclosure or method according to any of the preceding claims, using a cover in the form of a sheet which is initially fully recoverable to an extent within the range from 10 to 50 percent.

29.     An article or enclosure according to any of claims 1 to 3, 8 to 22 and 25 to 28 wherein the curable material has been cured.

30.     An article, enclosure or method for enclosing at least part of a substrate substantially as described in any one of the foregoing Examples 1 to 62.

0152213

31. A method of enclosing at least part of an object which comprises:

(a) installing around the object a substantially solid layer of a curable adhesive comprising an epoxy compound or mixture of a free-radical-curable material, a polymer and a free-radical generatoror an activator catalyst for such a generator;

(b) installing over the curable adhesive an intermediate layer comprising heat-softenable polymeric material;

(c) installing over the intermediate layer a dimensionally recoverable cover; and

(d) causing recovery of the cover, and curing of the curable adhesive.

32. A method according to claim 31, comprising the preliminary step of installing on the object an activator layer comprising an activator catalyst which will activate the free-radical generator when contacted with the curable adhesive.

33. An object enclosed by an article, method or enclosure according to any of claims 1 to 22 and 25 to 32 wherein the object enclosed is a substantial heat sink.

34. An object according to claim 33 wherein the object is a metal pipeline.

35.    An object according to claim 33, wherein the object is an electrical power cable splice or termination.

36.    A kit-of-parts for enclosing at least part of an object which comprises:
(a) an article comprising a dimensionally recoverable cover;

(b) a curable adhesive which can be wrapped around the object and comprises an epoxy compound or a substantially solid curable mixture of a free-radical-curable material, a polymer and a free-radical generator or an activator catalyst for such a generator; and

(c) heat-softenable polymeric material which can be installed around the object between the cover and the curable adhesive.

37.    A kit-of-parts according to claim 36 additionally comprising an activator catalyst for the free-radical generator in a form suitable for application to the object prior to application of the curable adhesive thereto containing the free-radical generator.

38.    A kit-of-parts according to claim 36 or 37 wherein the heat-softenable polymeric material incorporates an activator catalyst for the free-radical generator.

39.    A method of manufacturing an article carrying a substantially solid curable mixture of a free-radical-curable material, a polymer and a free-radical generator comprising mixing the polymer and generator with a liquid free-radical-curable material capable of swelling or dissolving the polymer thereby forming a flowable mixture, applying the flowable mixture to the article, and allowing the viscosity of the mixture to increase so as to render the applied mixture substantially solid.

40. A protective covering for an object comprising a primary layer of at least partly cured polymeric material adhering to a surface of the object and a secondary cover of polymeric material applied as a pre-existing self-supporting article to the primary layer on the object.

41. A method of applying a protective covering to an object comprising applying a primary layer of curable polymeric material to the object; at least partly curing the polymeric material of the primary layer; and applying to the primary layer a secondary cover of pre-existing self-supporting polymeric material.

42. A covering or method according to claim 40 or 41, wherein the primary layer is at least partly cured, preferably to a substantially tack-free state, on the object before application of the secondary cover.

43. A covering or method according to claim 40, 41 or 42 wherein the secondary cover is adhered to the primary layer by a cured adhesive and the primary layer contains a catalyst which catalyses curing of the adhesive on contact with the primary layer.

44.    A covering according to claim 40 when used in an enclosure, article or method according to any of claims 1 to 39.

45.    A kit of parts for protectively covering an object, comprising (a) material(s) applicable to the object to produce thereon an adherent primary layer of at least partly cured polymeric material as specified in any of claims 40 to 44; and (b) a secondary cover of pre-existing self-supporting polymeric material which is as specified in any of claims 40 to 44 and which is applicable to the primary layer.

## Fig.1.

## Fig.2.

## Fig.3.

## Fig. 4.

## Fig. 5.

Fig.6.

_Fig.7._

_Fig.8._

Fig. 9.

4x35 NAYY

4x150NA 2XY

Fig. 10.

5/5

0152213